# EUROPEAN PATENT SPECIFICATION

(11) **EP 3 002 442 B1**
(45) Date of publication and mention of the grant of the patent: **30.11.2016**
(21) Application number: 14186983.4
(22) Date of filing: 30.09.2014
(51) Int. Cl.: F02M 31/04, F02M 35/10, F02B 33/40, F02B 39/10, F02B 37/04

(54) **METHOD AND APPARATUS FOR HEATING THE INTAKE AIR OF AN ENGINE**
Verfahren und Vorrichtung zum Vorwärmen der Ansaugluft einer Brennkraftmaschine
Procédé et appareil permettant de chauffer l'air d'admission d'un moteur

(43) Date of publication of application: 06.04.2016
(73) Proprietor: Valeo Systèmes de Contrôle Moteur, 95800 Cergy (FR)
(72) Inventor: Webster, Matthew, Basildon, SS14 3WN (GB); Marcinkowski, Julien, 78500 SARTROUVILLE (FR); Potteau, Sébastien, 78510 TRIEL SUR SEINE (FR)
(74) Representative: Garcia, Christine

(56) References cited:
- DE-A1-102010 027 220
- JP-A- 2001 028 851
- US-A1- 2002 134 082
- US-A1- 2010 095 914
- US-A1- 2014 208 745

## Description

### Technical Field

The present invention relates to methods and apparatus for heating the intake air of an engine, and particularly to methods and apparatus in which a supercharger is used to heat the intake air.

### Background of the Invention

It is desirable to minimise the level of pollutants in emissions from engines, particularly from engines in automobiles. It is known that the shorter the warm-up duration of an engine, the lower the level of pollutants emitted. It is therefore desirable to shorten the warm-up duration for engines.

A suggested arrangement for warming the intake gases comprises resistive elements placed directly in the air intake pipes. This is effective in heating the intake air, but suffers from at least two disadvantages: Firstly, it is a relatively expensive system, especially in the context of it use (it is only used for cold starts, for a short period of time). Secondly, it is intrusive because it can be awkward install the resistive elements and the system should be airtight.

Patent application DE 10 2010 027 220 describes a conventional method of heating the intake air of an engine.

French patent application No. 1363113 filed on 19 December 2013 describes an arrangement in which an electric supercharger is run during the starting phase of an engine, or during the phase preceding the starting. By running the supercharger at this time, the intake air to the engine is warmed thereby shortening the warm-up direction of the engine and lowering the pollutant level.

The present invention seeks to provide an improved method of heating intake air and an improved electric supercharger.

### Summary of the Invention

According to a first aspect of the invention, there is provided a method of heating the intake air of an engine using an electric supercharger, the supercharger comprising a compressor wheel and an electric drive assembly for rotating the compressor wheel. The supercharger is arranged to operate in a charging configuration in which the compressor wheel is rotated in a first direction such that the engine is supplied with an air charge. The method of heating the intake air comprises the step of operating the supercharger in a second configuration, in which second configuration the compressor wheel is rotated in a reverse direction, opposite to the first direction.

It has been found that when the compressor wheel is run in reverse, air is still drawn through the supercharger (i.e. from inlet to outlet in the same direction as when the wheel is run in a forwards direction) and this air is still compressed and is therefore heated. Furthermore, it has been found that running the compressor wheel in reverse creates a larger heating effect than when the compressor wheel is run in the conventional direction (i.e. for supplying an air charge). The present invention makes use of this discovery, and recognises that by running the compressor wheel in reverse, the intake air can be heated. Heating the intake air can be desirable in a number of scenarios:
Heating the intake air can be advantageous before engine start-up (i.e. in the phase preceding the starting of the engine) as it can shorten the warm-up period for the engine. For example, the supercharger may be operated in the second configuration before the engine is started, such that the intake air is pre-heated prior to the engine starting. This may also enable components surrounding the intake air (such as the intake line and/or the intake manifold) to be warmed, and thus can pre-heat parts of the engine.

Alternatively or additionally, the supercharger may be operated in the second configuration during the starting phase, whilst the engine is running. For example, the supercharger may be operated in the second configuration whilst the engine is warming up but before it has reached operating temperature. By heating the intake air with the supercharger, the engine may be faster in reaching its operating temperature.

The present invention may also be of use when the engine has already warmed up. The supercharger may be operated in the second configuration when the engine has warmed up and is at operating temperature. For example, it may be desirable to heat the intake air for after-treatment, such as Diesel Particulate Filter (DPF) regeneration when a higher exhaust temperature tends to be needed.

The method may comprise the step of regulating the volume of intake air received by the engine. For example, the intake air may be regulated such that the mass of intake air is substantially the same when the supercharger is run in the second configuration and when the supercharger is inactive. Regulating the air flow in this manner ensures the engine speed does not unduly increase when the supercharger is being run in the second configuration.

According to a second aspect of the invention, there is provided a system for heating the intake air of an engine, the system comprising: an electric supercharger, and a control unit for controlling the supercharger. The supercharger comprises a compressor wheel and an electric drive assembly for rotating the compressor wheel. Wherein the supercharger is arranged to operate in a charging configuration in which the compressor wheel is rotated in a first direction such that the engine is supplied with an air charge. Characterised in that the control unit is configured to operate the supercharger in a second configuration in which the compressor wheel is rotated in a reverse direction, opposite to the first direction. By configuring the control unit to be able to run the supercharger in the second configuration, the supercharger can be selectively used (in the second configuration) to heat the intake air, whilst retaining the supercharger's ability to supply an air charge in the conventional manner (in the charging configuration).

In the charging configuration the compressor wheel is rotated in a first direction such that the engine is supplied with an air charge. The charging configuration is, for example, the configuration adopted when a power boost is demanded. In the second configuration, the supercharger preferably still acts as a compressor. Thus, in the second configuration, the pressure at the supercharger outlet may still be higher than the pressure at the inlet. It will be appreciated, however, that the pressure increase effected by the supercharger in the second configuration is preferably less than the pressure increase effected by the supercharger in the first configuration. The pressure ratio when the supercharger is operating in the charging configuration, is preferably higher than the pressure ratio when the supercharger is operating in the second configuration. The compressor is preferably more efficient in the charging configuration than in the second configuration.

It has been observed that, when the supercharger is run in the second configuration, surprisingly, air is still drawn through the supercharger (i.e. from inlet to outlet in the same direction as when the wheel is run in a forwards direction). The supercharger tends to heat the air when operating in both the charging and second configurations, but it has been observed that the temperature rise is actually higher in the second configuration than in the charging configuration, even if the pressure ratio of the supercharger is lower. This is thought to be because the supercharger is less aerodynamically efficient when run in reverse; a compressor wheel tends to be designed to most efficiently operate when the supercharger is run in the charging configuration. When that compressor wheel is run in reverse, the blades on the compressor wheel tend to inefficiently interact with other parts of the supercharger (for example stator blades). This can result in significant shear flows and viscous effects in the air passing through the supercharger.

The supercharger may comprise a diffuser. The diffuser may comprise a set of stator blades. In the charging configuration, the air flow leaving the compressor wheel may be at a first angle of incidence to the stator blades. In the second configuration, the air flow leaving the compressor wheel may be at a second angle of incidence to the stator blades. The second angle of incidence may be higher than the first angle of incidence. The second angle of incidence may be such that the air flow separates when encountering the stator blade.

The supercharger is an electric supercharger comprising an electric drive assembly for rotating the compressor wheel. The present invention makes use of the fact that in an electric supercharger, the rotational direction of the compressor wheel is not necessarily linked to an output of the engine; thus the rotation of the compressor wheel can, in principal, be reversed, which would be impossible in many conventional (engine-driven) superchargers.

The electric drive assembly may comprise an electric motor. The electric motor is preferably operable to rotate in the first direction and in the reverse direction. The control unit may be configured to control the direction of rotation of the motor such that in the charging configuration the compressor wheel is rotated in the first direction, and in the second configuration the compressor wheel is rotated in the reverse direction. The compressor wheel is preferably directly linked to the drive shaft of the motor; thus the drive shaft of the motor preferably rotates in the first direction to rotate the compressor wheel in the first direction.

The electric motor is preferably a switched reluctance motor (SRM). A SRM may be especially attractive for the present invention because it is relatively simple to switch the direction of rotation of a SRM. The switched reluctance motor may comprise a rotor and a plurality of pairs of stator coils. The control unit may be arranged to control current supplied to the stator coils, such that:(i) when the supercharger is in the charging configuration successive pairs of stator coils are supplied with current in a first order; and (ii) when the supercharger is in the second configuration successive pairs of stator coils are supplied with current in a second order, which is the reverse of the first order.

The starting sequence of the SRM may differ between the charging configuration and the second configuration. In the charging configuration, the starting sequence preferably rotates the rotor such that the compressor wheel rotates in the first direction. In the second configuration, the starting sequence preferably rotates the rotor such that the compressor wheel rotates in the reverse direction.

The control unit may be configured to switch the operation of the supercharger between the charging configuration and the second configuration. The control unit is preferably arranged to switch between the configurations in response to an input signal. The control unit may be configured to switch the operation of the supercharger to the second configuration in response to a heating demand input signal. The heating demand signal may be provided in the event that a higher intake temperature is desired. The heating demand signal may be provided by a power-train control module (PCM) associated with the engine.

The control unit may be configured to regulate the volume of intake air received by the engine. For example, the control unit may control a valve to regulate the intake air such that the mass of intake air is substantially the same when the supercharger is run in the second configuration and when the supercharger is inactive.

The system may further comprise the engine. The electric supercharger may be arranged upstream of the engine to supply the engine with the air charge when the supercharger is run in the charging configuration.

The present invention is thought to be particularly beneficial in automotive applications. In preferred embodiments, the system is for use in an automobile. The engine is preferably an internal combustion engine. The engine is preferably a relatively small capacity engine. The engine is preferably 4 litres or less, more preferably 3 litres or less, and yet more preferably 2 litres or less). The engine may be in an automobile. The automobile may be less than 3.5 tonnes, and more preferably less than 2 tonnes.

According to another aspect of the invention, there is provided a control unit configured for use as the control unit described herein.

It will be appreciated that any features described with reference to one aspect of the invention are equally applicable to any other aspect of the invention, and vice versa.

### Description of the Drawings

An embodiment of the invention will now be described, by way of example only, with reference to the accompanying schematic drawings of which:
Figure 1 is a schematic showing an engine in conjunction with a supercharger according to a first embodiment of the invention;
Figure 2 is a sectional view of the supercharger of Figure 1;
Figure 3 is a flowchart showing the steps conducted by the control unit in the first embodiment of the invention;
Figures 4a and 4b are schematic drawings of the compressor wheel and stator in the supercharger of Figure 1.

### Detailed Description

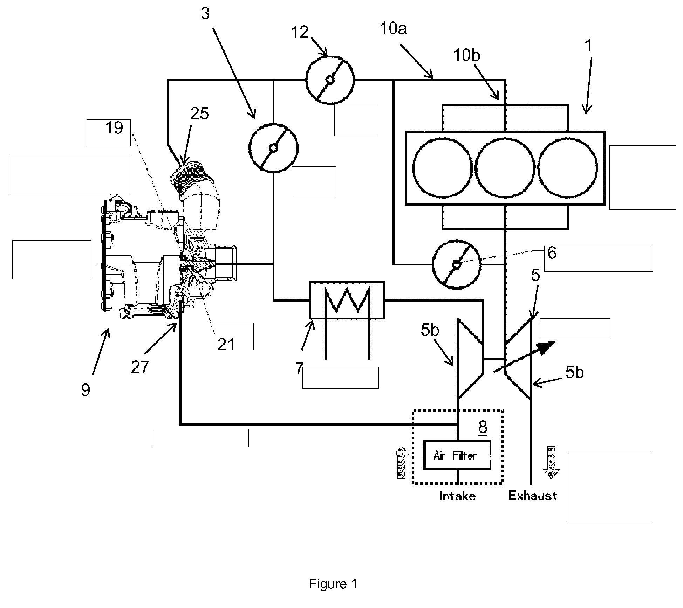

Figure 1 shows a three-cylinder internal combustion (IC) engine 1 in combination with an apparatus for supplying compressed intake gases. The apparatus comprises a turbocharger 5, an exhaust gas recirculation (EGR) valve 6, a charge air cooler (CAC) 7, a supercharger 9 and a supercharger bypass valve 3.

In accordance with conventional turbochargers, the turbocharger 5 is driven by the exhaust gases from the engine 1 passing through the Variable-Nozzle Turbine (VNT) 5a thereby driving the turbocharger compressor 5b which draws in, and compresses, feed air supplied via an air intake 8. Some of the exhaust gas output of the engine 1 is returned as an input to the engine via the EGR valve 6.

The output of the turbocharger 5 is then fed through the CAC 7 before being supplied to the supercharger 9 (in another embodiment (not shown) the CAC is downstream of the supercharger 9). The supercharger 9 further compresses the output of the turbocharger and supplies the compressed intake gases (referred to herein as a compressed air charge) to the engine 1 via the intake line 10a and engine manifold 10b. Having a turbocharger 5 and a supercharger 9 in series *per se* (sometimes referred to a twincharger) is well known. This arrangement can be used to reduce turbo-lag because the supercharger tends to be most effective at low speeds whereas the turbocharger tends to be most effective at higher speeds.

It is desirable to minimise the level of pollutants in emissions from engines, particularly from engines in automobiles. It is known that the shorter the warm-up duration of an engine, the lower the level of pollutants emitted. It is therefore desirable to shorten the warm-up duration for engines.

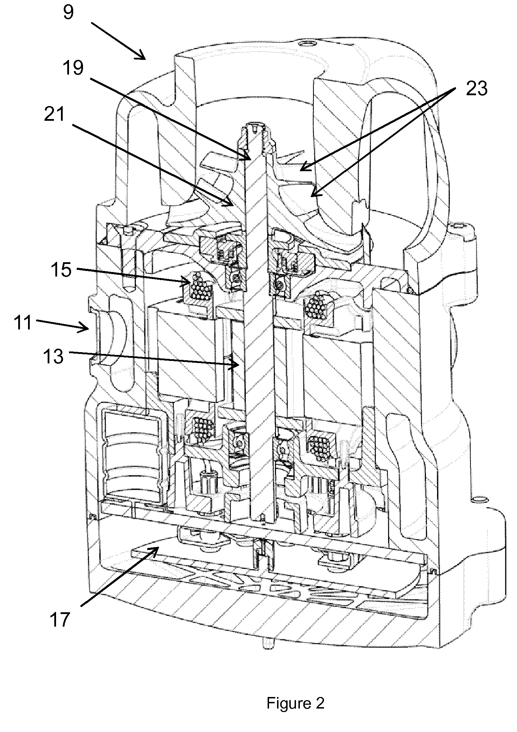

In the first embodiment of the invention, the supercharger 9 is an electric supercharger and is shown in more detail in Figure 2. The supercharger 9 is a rotodynamic centrifugal compressor. The supercharger 9 comprises a drive assembly 11 including a switched reluctance motor (SRM) having a rotor 13 and a plurality of stator coils 15. A control unit 17 at the rear of the supercharger comprises a microprocessor and control electronics (not shown). The control unit 17 controls the energising of the stator coils 15 for operation of the SRM.

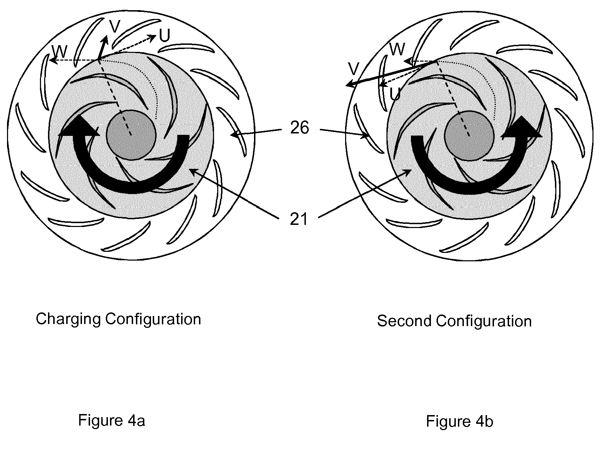

The SRM is arranged to rotate a drive shaft 19 on which a compressor wheel 21 is mounted. The compressor wheel 21 comprises a series of curved vanes 23. The compressor wheel is designed (in combination with stator blades 26 (not visible in Figure 2 but shown in Figures 4a/4b) such that when it is rotated in a clockwise direction (as viewed from above) at high speed by the SRM, it outputs, via the supercharger output 25, a compressed air charge that is fed into the engine via the intake line 10a. For these purposes, the supercharger when run in this manner can be considered to be operating in a so-called "charging configuration"; this is the conventional use of a supercharger and is well-known *per se.*

The above-mentioned structural features of the supercharger 9 in the first embodiment are present in known superchargers. Embodiments of the present invention seek to provide an improved arrangement for heating the intake air of the engine 1. In this regard, the supercharger 9 of the first embodiment of the invention comprises a control unit 17 that (contrary to known superchargers) is configured to run the supercharger 9 in a second configuration, which is different to the charging configuration described above. Specifically, the control unit 17 is arranged to control the SRM such that the compressor wheel 21 is rotated in an anti-clockwise direction (i.e. the reverse of the direction in the charging configuration).

The present invention has identified a benefit with running the supercharger 9 in reverse, namely that it not only continues to draw air through it in the same direction (i.e. the pressure at the supercharger outlet 25 is still higher than the pressure at the inlet 27), but that the air output from the supercharger when it is run in this manner is surprisingly hot. By way of example, when the supercharger 9 was run on a test bench, in the charging configuration and in the second (reverse) configurations the following data were obtained:

**Table 1**

| **Operation** | **Clockwise rotation (charging configuration)** | **Anti-clockwise rotation (second configuration)** |
|---|---|---|
| Speed | 51'000 rpm | -52'000 rpm |
| Mass air flow | 190 kg/hr | 110 kg/hr |
| Temperature rise | 15°C | 25°C |
| Pressure ratio | 1,135 | 1,043 |
| Compressor isentropic efficiency | 70 % | 15 % |
| Power given to air flow | 800 W | 760 W |

As can be seen from table 1 above, the supercharger still generates a pressure increase when run in reverse at substantially the same speed. That pressure increase is less than in the charging configuration and it is significantly less efficient (15% compared to 70%). Surprisingly though, an extra 10°c rise in the temperature of the output air was observed compared to when the compressor is driven in a clockwise rotation. This is thought to be because the compressor wheel 21 tend not to efficiently interact with the stator blades when it is run in reverse, resulting in significant shear flows and viscous effects in the air passing through the supercharger: Schematic diagrams Figures 4a and 4b show the air flow in the charging configuration (Figure 4a) and second configuration (Figure 4b). The absolute speed V of the air leaving the vanes 23 of the compressor wheel 21 in the charging configuration is substantially tangential to the stators 26, whereas in the second configuration the absolute speed V of the air is approximately perpendicular to the stators 26. It will be appreciated that in both configurations, the compressor still draws in air in the same direction (i.e. through inlet, into compressor and out of outlet)

In the first embodiment of the invention, the supercharger 9 is therefore used as part of a system to heat the intake air of the engine; i.e. when it is desirable to have a higher intake air temperature, the control unit 17 can operate the supercharger such that the compressor wheel 21 is run in reverse (i.e. in a second configuration).

Higher intake air temperatures can be desirable in various scenarios:
For example, it may be desirable to heat the intake air before the engine 1 is started because it can shorten the warm-up period for the engine. The control unit 17 in the supercharger 9 of the first embodiment is therefore configured to be able to operate the supercharger in the second configuration prior to engine start, such that the intake air is pre-heated prior to the engine starting. This may also enable components surrounding the intake air (such as the intake line 10a and/or the intake manifold 10b) to be warmed, and thus can pre-heat parts of the engine.

The control unit 17 is also configured to be able to operate the supercharger 9 in the second configuration whilst the engine is running. For example, the supercharger 9 may be operated in the second configuration whilst the engine is warming up but before it has reached operating temperature. By heating the intake air with the supercharger 9, the engine 1may be faster in reaching its operating temperature.

The control unit 17 is also configured to be able to operate the supercharger in the second configuration when the engine 1 has warmed up and is at operating temperature. For example, it may be desirable to heat the intake air for after-treatment, such as Diesel Particulate Filter (DPF) regeneration when a higher exhaust temperature tends to be needed.

Referring back to Figure 1, the apparatus for supplying compressed intake gases includes a butterfly valve 12 for regulating the flow of the intake charge into the engine 1. When the supercharger 9 is used to warm the intake air, the engine control unit (ECU) controls the valve 12 such that it is closed to a greater extent than if the supercharger were inactive, such that the mass flow of air to the engine is the same in both scenarios (although the air will, as explained above, be at a higher temperature when the supercharger is in the second configuration). Using the valve 12 to regulate the intake air in this manner ensures the engine speed does not unduly increase when the supercharger is being run in the second configuration.

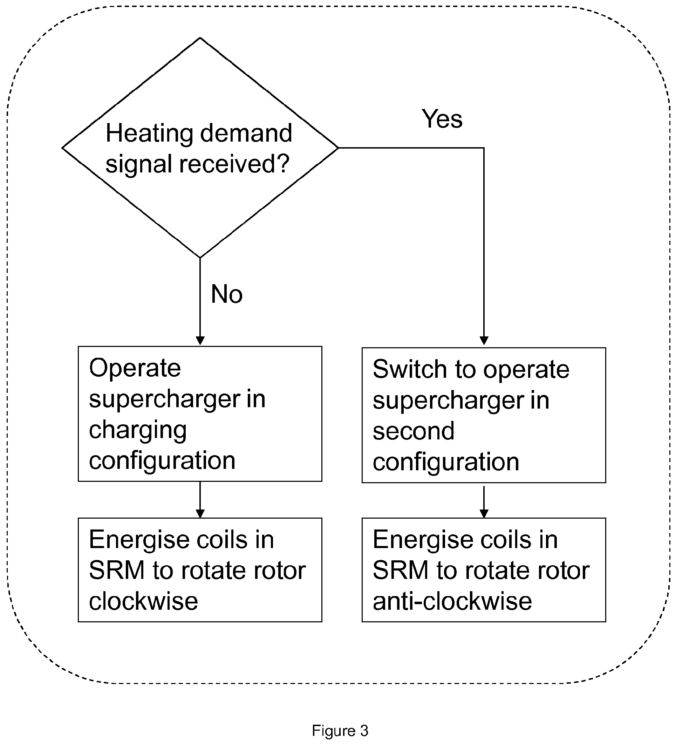

As described above, the control unit 17 is configured to operate the supercharger not only in the charging configuration, but also in the second configuration in which the compressor wheel 21 is rotated in a reverse direction, opposite to the first direction. Figure 3 is a schematic of part of the control unit 17 of the supercharger of the first embodiment. The control unit 17 has a default condition in which the supercharger operates in the charging configuration. However, the control unit is arranged to receive a heating demand signal from the engine power-train control module (PCM)/engine control unit (ECU). If and when the demand signal has been received, the control unit 17 stops the compressor wheel 21, switches operation of the supercharger into the second configuration and thus re-starts by rotating in the reverse direction. The second configuration is maintained until a 'stop' signal (not shown in Figure 3) is received, in response to which the control unit reverts to the default charging configuration.

The control unit 17 is configured to rotate the compressor wheel 21 in the reverse direction by changing the initial direction of rotation during the starting sequence, and then changing the sequencing of the stator coil energisation in the SRM. The reverse rotation is effected by the control unit energising the stator coils of the SRM in the reverse order to that used in the charging configuration (for example energising the stator pairs in order ABC in the charging configuration, and energising the stator pairs in order CBA in the second configuration). The rotor (and the compressor wheel) therefore rotates in the opposite direction.

Whilst the present invention has been described and illustrated with reference to a particular embodiment, it will be appreciated by those of ordinary skill in the art that the invention lends itself to many different variations not specifically illustrated herein. Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A method of heating the intake air of an engine using an electric supercharger, the supercharger comprising
a compressor wheel and
an electric drive assembly for rotating the compressor wheel;
wherein the supercharger is arranged to operate in a charging configuration in which the compressor wheel is rotated in a first direction such that the engine is supplied with an air charge, and
**characterised in that**
the method of heating the intake air comprises the step of operating the supercharger in a second configuration, in which second configuration the compressor wheel is rotated in a reverse direction, opposite to the first direction.

2. A method according to claim 1, wherein the supercharger is operated in the second configuration before the engine is started, such that the intake air is pre-heated prior to the engine starting.

3. A method according to claim 1, wherein the supercharger is operated in the second configuration during the starting phase whilst the engine is running.

4. A method according to claim 3, wherein the supercharger is operated in the second configuration whilst the engine is warming up to reach operating temperature.

5. A method according to any preceding claim, wherein the supercharger is operated in the second configuration when the engine has warmed up and is at operating temperature.

6. A system for heating the intake air of an engine, the system comprising:
an electric supercharger, and
a control unit for controlling the supercharger,
wherein the supercharger comprises
a compressor wheel and
an electric drive assembly for rotating the compressor wheel,
and wherein the supercharger is arranged to operate in a charging configuration in which the compressor wheel is rotated in a first direction such that the engine is supplied with an air charge,
**characterised in that** the control unit is configured to operate the supercharger in a second configuration in which the compressor wheel is rotated in a reverse direction, opposite to the first direction.

7. A system according to claim 6, wherein the electric drive assembly comprises an electric motor, the motor being operable to rotate in the first direction and in the reverse direction, and the control unit is configured to control the direction of rotation of the motor such that in the charging configuration the compressor wheel is rotated in the first direction, and in the second configuration the compressor wheel is rotated in the reverse direction.

8. A system according to claim 7, wherein the electric motor is a switched reluctance motor.

9. A system according to claim 8, wherein the switched reluctance motor comprises:
a rotor and
a plurality of pairs of stator coils,
and wherein the control unit is arranged to control current supplied to the stator coils, such that:
(i) when the supercharger is in the charging configuration successive pairs of stator coils are supplied with current in a first order; and
(ii) when the supercharger is in the second configuration successive pairs of stator coils are supplied with current in a second order, which is the reverse of the first order.

10. A system according to any of claims 6 to 9, wherein the control unit is configured to switch the operation of the supercharger between the charging configuration and the second configuration, in response to an input signal.

11. A system according to claim 10, wherein the control unit is configured to switch the operation of the supercharger to the second configuration in response to a heating demand input signal.

12. A system according to any of claims 6 to 11 further comprising the engine, wherein the electric supercharger is arranged upstream of the engine to supply the engine with the air charge when the supercharger is run in the charging configuration.

13. A system according to any of claims 6 to 12, where the system is for use in an automobile.

## Patentansprüche

1. Verfahren zum Vorwärmen der Ansaugluft einer Brennkraftmaschine, einen elektrischen Turbolader verwendend, wobei der Turbolader aufweist
ein Kompressorrad und
eine elektrische Antriebsanordnung zum Drehen des Kompressorrades;
wobei der Turbolader angeordnet ist, in einer Ladungskonfiguration zu arbeiten, in welcher das Kompressorrad in eine erste Richtung gedreht wird, sodass die Brennkraftmaschine mit einer Luftladung versorgt wird, und
**dadurch gekennzeichnet, dass**
das Verfahren zum Vorwärmen der Ansaugluft den Schritt zum Betreiben des Turboladers in einer zweiten Konfiguration aufweist, in welcher zweiten Konfiguration das Kompressorrad in eine umgekehrte Richtung, der ersten Richtung entgegengesetzt, gedreht wird.

2. Verfahren nach Anspruch 1, wobei der Turbolader in der zweiten Konfiguration betrieben wird, bevor die Brennkraftmaschine gestartet wird, sodass die Ansaugluft bevor die Brennkraftmaschine startet vorgewärmt wird.

3. Verfahren nach Anspruch 1, wobei der Turbolader während der Startphase in der zweiten Konfiguration betrieben wird, während die Brennkraftmaschine läuft.

4. Verfahren nach Anspruch 3, wobei der Turbolader in der zweiten Konfiguration betrieben wird, während sich die Brennkraftmaschine aufwärmt, um eine Betriebstemperatur zu erreichen.

5. Verfahren nach einem vorangehenden Anspruch, wobei der Turbolader in der zweiten Konfiguration betrieben wird, wenn die Brennkraftmaschine aufgewärmt und auf Betriebstemperatur ist.

6. System zum Vorwärmen der Ansaugluft einer Brennkraftmaschine, wobei das System aufweist:
einen elektrischen Turbolader, und
eine Steuereinheit zum Steuern des Turboladers, wobei der Turbolader aufweist
ein Kompressorrad und
eine elektrische Antriebsanordnung zum Drehen des Kompressorrades;
und wobei der Turbolader angeordnet ist, in einer Ladungskonfiguration zu arbeiten, in welcher das Kompressorrad in eine erste Richtung gedreht wird, sodass die Brennkraftmaschine mit einer Luftladung versorgt wird,
**dadurch gekennzeichnet, dass** die Steuereinheit konfiguriert ist, den Turbolader in einer zweiten Konfiguration zu betreiben, in welcher das Kompressorrad in eine umgekehrte Richtung, der ersten Richtung entgegengesetzt, gedreht wird.

7. System nach Anspruch 6, wobei die elektrische Antriebsanordnung einen Elektromotor aufweist, wobei der Motor betriebsfähig ist, in der ersten Richtung und in der umgekehrten Richtung zu drehen, und die Steuereinheit konfiguriert ist, die Drehungsrichtung des Motors zu steuern, sodass in der Ladungskonfiguration das Kompressorrad in der ersten Richtung gedreht wird und in der zweiten Konfiguration das Kompressorrad in der umgekehrten Richtung gedreht wird.

8. System nach Anspruch 7, wobei der Elektromotor ein geschalteter Reluktanzmotor ist.

9. System nach Anspruch 8, wobei der geschaltete Reluktanzmotor aufweist:
einen Rotor und
mehrere Statorspulenpaare,
und wobei die Steuereinheit angeordnet ist, einen Strom zu steuern, der den Statorspulen zugeleitet wird, sodass:
(i) wenn der Turbolader in der Ladungskonfiguration ist, aufeinanderfolgende Statorspulenpaare mit Strom einer ersten Ordnung versorgt sind; und
(ii) wenn der Turbolader in der zweiten Konfiguration ist, aufeinanderfolgende Statorspulenpaare mit Strom einer zweiten Ordnung versorgt sind, welche die Umkehr der ersten Ordnung ist.

10. System nach einem der Ansprüche 6 bis 9, wobei die Steuereinheit konfiguriert ist, den Betrieb des Turboladers zwischen der Ladungskonfiguration und der zweiten Konfiguration als Reaktion auf ein Eingabesignal umzuschalten.

11. System nach Anspruch 10, wobei die Steuereinheit konfiguriert ist, den Betrieb des Turboladers als Reaktion auf ein Vorwärmeanforderungseingabesignal in die zweite Konfiguration umzuschalten.

12. System nach einem der Ansprüche 6 bis 11, des Weiteren aufweisend die Brennkraftmaschine, wobei der elektrische Turbolader aufwärtsseitig der Brennkraftmaschine angeordnet ist, um die Brennkraftmaschine mit der Ansaugluft zu versorgen, wenn der Turbolader in der Ladungskonfiguration läuft.

13. System nach einem der Ansprüche 6 bis 12, wo das System zur Verwendung in einem Automobil dient.

## Revendications

1. Procédé de chauffage de l'air d'admission d'un moteur à l'aide d'un compresseur de suralimentation électrique, le compresseur de suralimentation électrique comprenant
une roue de compresseur et
un ensemble d'entraînement électrique servant à faire tourner la roue de compresseur ;
dans lequel le compresseur de suralimentation est conçu pour fonctionner dans une configuration de charge dans laquelle la roue de compresseur tourne dans un premier sens de manière à fournir une charge d'air au moteur, et
le procédé de chauffage de l'air d'admission étant **caractérisé en ce que**
il comprend l'étape consistant à faire fonctionner le compresseur de suralimentation dans une deuxième configuration, deuxième configuration dans laquelle la roue de compresseur tourne dans un sens inverse, opposé au premier sens.

2. Procédé selon la revendication 1, dans lequel le compresseur de suralimentation fonctionne dans la deuxième configuration avant le démarrage du moteur de manière à préchauffer l'air d'admission préalablement au démarrage du moteur.

3. Procédé selon la revendication 1, dans lequel le compresseur de suralimentation fonctionne dans la deuxième configuration lors de la phase de démarrage alors que le moteur est en marche.

4. Procédé selon la revendication 3, dans lequel le compresseur de suralimentation fonctionne dans la deuxième configuration alors que le moteur se réchauffe pour atteindre sa température de fonctionnement.

5. Procédé selon l'une quelconque des revendications précédentes, dans lequel le compresseur de suralimentation fonctionne dans la deuxième configuration lorsque le moteur s'est réchauffé et a atteint sa température de fonctionnement.

6. Système de chauffage de l'air d'admission d'un moteur, le système comprenant:
un compresseur de suralimentation électrique, et
une unité de commande servant à commander le compresseur de suralimentation électrique,
dans lequel le compresseur de suralimentation comprend
une roue de compresseur et
un ensemble d'entraînement électrique servant à faire tourner la roue de compresseur,
et dans lequel le compresseur de suralimentation est conçu pour fonctionner dans une configuration de charge dans laquelle la roue de compresseur tourne dans un premier sens de manière à fournir une charge d'air au moteur,
le système étant **caractérisé en ce que** l'unité de commande est configurée pour faire fonctionner le compresseur de suralimentation dans une deuxième configuration dans laquelle la roue de compresseur tourne dans un sens inverse, opposé au premier sens.

7. Système selon la revendication 6, dans lequel l'ensemble d'entraînement électrique comprend un moteur électrique, le moteur étant apte à tourner dans le premier sens et dans le sens inverse, et l'unité de commande est configurée pour commander le sens de rotation du moteur de manière ce que, dans la configuration de charge, la roue de compresseur tourne dans le premier sens et, dans la deuxième configuration, la roue de compresseur tourne dans le sens inverse.

8. Système selon la revendication 7, dans lequel le moteur électrique est un moteur à réluctance commutée.

9. Système selon la revendication 8, dans lequel le moteur à réluctance commutée comprend:
un rotor et
une pluralité de paires de bobines statoriques,
et dans lequel l'unité de commande est conçue pour commander l'alimentation en courant des bobines statoriques de manière à:
(i) alimenter en courant des paires successives de bobines statoriques dans un premier ordre lorsque le compresseur de suralimentation est dans la configuration de charge ; et
(ii) alimenter en courant des paires successives de bobines statoriques dans un deuxième ordre, inverse au premier ordre, lorsque le compresseur de suralimentation est dans la deuxième configuration.

10. Système selon l'une quelconque des revendications 6 à 9, dans lequel l'unité de commande est configurée pour commuter le fonctionnement du compresseur de suralimentation entre la configuration de charge et la deuxième configuration en réponse à un signal d'entrée.

11. Système selon la revendication 10, dans lequel l'unité de commande est configurée pour commuter le fonctionnement du compresseur de suralimentation sur la deuxième configuration en réponse à un signal d'entrée de demande de chauffage.

12. Système selon l'une quelconque des revendications 6 à 11, comprenant en outre le moteur, dans lequel le compresseur de suralimentation électrique est agencé en amont du moteur pour fournir la charge d'air au moteur lorsque le compresseur de suralimentation est utilisé dans la configuration de charge.

13. Système selon l'une quelconque des revendications 6 à 12, lequel système est destiné à être utilisé dans une automobile.
